# EUROPÄISCHE PATENTSCHRIFT

(11) **EP 4 449 003 B1**
(45) Veröffentlichungstag und Bekanntmachung des Hinweises auf die Patenterteilung: **20.05.2026**
(21) Anmeldenummer: 22843994.9
(22) Anmeldetag: 12.12.2022
(51) Int. Cl.: F16L 33/22, F16L 43/00, F16L 43/02, F16L 37/12, F16L 37/138

(54) **ROHRPRESSKUPPLUNG**
COMPRESSION PIPE COUPLING
RACCORD DE TUYAU À COMPRESSION

(30) Priorität: 13.12.2021 AT 509942021
(43) Veröffentlichungstag der Anmeldung: 23.10.2024
(73) Patentinhaber: Henn GmbH & Co KG., 6850 Dornbirn (AT)
(72) Erfinder: MOOSBRUGGER, Christian, 6850 Dornbirn (AT)
(74) Vertreter: Burger, Hannes Alfred
(86) Internationale Anmeldenummer: PCT/AT2022/060434
(87) Internationale Veröffentlichungsnummer: WO 2023/108183

(56) Entgegenhaltungen:
- EP-A2- 0 848 200
- DE-A1- 2 166 331
- US-A- 3 918 679

## Beschreibung

Die Erfindung betrifft eine Rohrpresskupplung zur Verbindung mit zumindest einem Rohr, welches für die Leitung eines Fluides dient.

Gattungsgemäße Rohrpresskupplungen sind beispielsweise aus der EP 01 59 997 B1 bekannt. Diese dienen dazu, zuverlässige und langzeitstabile Verbindungen bei Rohren aus Kunststoffen sowie relativ weichen Metallen sowie Mehrschicht-Verbundwerkstoffen herzustellen. Die bekannten Rohrpresskupplungen können als Alternative zum Schweißen beispielsweise für die Verbindung von Hydraulikleitungen, Wasser- oder Gaserdleitungen eingesetzt werden.

Das Prinzip der Verpressung besteht darin, dass das zu verpressende Rohrende auf eine in der Regel profiliert ausgebildete Stützhülse aufgeschoben wird, die Teil eines Fittings ist. Der Durchmesser der Stützhülse bzw. der Profilierungen ist derart gewählt, dass das Rohr ohne großen Kraftaufwand auf die Stützhülse gesteckt werden kann. Über das Rohrende wird bei der bekannten Verpressung eine Quetschhülse aufgeschoben. Über diese Quetschhülse wird schließlich axial eine Presshülse aufgeschoben. Diese Presshülse weist ein derartiges Innenprofil auf, dass die Quetschhülse und das darunterliegende Rohr derart verformt werden, dass das Rohrmaterial in die Profilierungen der Stützhülse gedrückt wird, um so eine langzeitstabile und langzeitdichte Verpressung zu erhalten. Zum Aufschieben der Presshülse sind insbesondere bei größeren Rohren oder bei Metallrohren hohe axiale Kräfte erforderlich, die in der Regel mittels eines speziellen hydraulischen Presswerkzeugs aufgebracht werden. Die Presshülse zeichnet sich bei den bekannten Rohrpresskupplungen durch ein im Wesentlichen zylindrisches Innenprofil aus.

Weitere Rohrpresskupplungen sind aus der US 3 918 679 A, der DE 21 66 331 A1 und der EP 0848 200 A2 bekannt.

Bei den bekannten Rohrpresskupplungen ist nachteilig, dass die für die Verpressung aufzubringenden Kräfte relativ hoch sind, so dass auch bei Verwendung hydraulischer Verpresswerkzeuge der Einsatzbereich der bekannten Verpressungen, abhängig vom Rohrdurchmesser, der Rohrwandstärke und der Härte des Rohrmaterials, begrenzt ist. Die hohen Verpressungskräfte hängen damit zusammen, dass das Rohrmaterial in das Profil der Stützhülse verdrängt wird. Insbesondere bei dickwandigen Rohren sind hierzu hohe Kräfte erforderlich.

Aufgabe der vorliegenden Erfindung war es, die Nachteile des Standes der Technik zu überwinden und eine verbesserte Rohrpresskupplung zur Verfügung zu stellen.

Diese Aufgabe wird durch eine Rohrpresskupplung gemäß den Ansprüchen gelöst.

Erfindungsgemäß ist eine Rohrpresskupplung ausgebildet. Die Rohrpresskupplung umfasst:
- eine Stützhülse mit einer außenliegenden Aufnahmefläche zur Aufnahme einer Rohrinnenmantelfläche eines Rohres;
- eine Spannklammer zum Andrücken der Rohrinnenmantelfläche des Rohres an die Stützhülse, wobei die Spannklammer eine Basis und einen Spannbereich aufweist, wobei der Spannbereich eine Spannbereichinnenfläche aufweist, welche zur Anlage an einer Rohraußenmantelfläche des Rohres ausgebildet ist, wobei die Spannklammer im Spannbereich eine Spannbereichaußenfläche aufweist, welche zumindest abschnittsweise in Axialrichtung weg von der Basis verjüngend ausgebildet ist;
- eine Außenhülse, welche mit der Stützhülse gekoppelt ist, wobei die Außenhülse eine Außenhülseninnenmantelfläche aufweist;
- eine Gleithülse, welche verschiebbar in der Außenhülse aufgenommen ist, wobei die Gleithülse eine Gleithülsenaußenseite aufweist, welche im verpressten Zustand zumindest abschnittsweise an der Außenhülseninnenmantelfläche anliegt und wobei die Gleithülse eine Gleithülseninnenseite aufweist, welche im verpressten Zustand an der Spannbereichaußenfläche der Spannklammer anliegt, wobei die Gleithülse an der Gleithülseninnenseite eine Erhebung aufweist, wobei im verpressten Zustand die Erhebung an der Außenfläche der Spannklammer anliegt.

Die erfindungsgemäße Rohrpresskupplung bringt den Vorteil mit sich, dass mit dieser eine einfache und beständige Verbindung mit einem Rohr herstellbar ist. Darüber hinaus ist die Rohrpresskupplung an sich einfach und kostengünstig herstellbar, wobei die Herstellung eine hohe Prozesssicherheit aufweist.

Weiters kann es zweckmäßig sein, wenn im Spannbereich der Spannklammer mehrere über den Umfang verteilte Spannarme ausgebildet sind, welche mit der Basis gekoppelt sind. Dies bringt den Vorteil mit sich, dass durch diese Maßnahme eine Verformbarkeit der einzelnen Spannarme bzw. der Spannklammern verbessert werden kann, wodurch die Einfachheit der Herstellung der Rohrpressverbindung weiter verbessert werden kann.

Ferner ist vorgesehen, dass ein Hauptkörper einteilig aus einem Blechumformteil ausgebildet ist, wobei im Hauptkörper die Außenhülse und die Stützhülse ausgebildet sind und mittels eines Übergangsabschnittes miteinander gekoppelt sind. Dies bringt den Vorteil mit sich, dass durch diese Maßnahme die Langzeitbeständigkeit der Rohrpresskupplung verbessert werden kann. Darüber hinaus kann durch diese Maßnahme die Einfachheit zur Herstellung der Rohrpresskupplung verbessert werden.

Darüber hinaus kann vorgesehen sein, dass die Gleithülse aus einem Blechumformteil ausgebildet ist. Dies bringt den Vorteil mit sich, dass durch diese Maßnahme die Langzeitbeständigkeit der Rohrpresskupplung verbessert werden kann. Darüber hinaus kann durch diese Maßnahme die Einfachheit zur Herstellung der Rohrpresskupplung verbessert werden.

Vorteilhaft ist auch eine Ausprägung, gemäß welcher vorgesehen sein kann, dass die Gleithülse eine Andrückschräge aufweist, welche durch einen konusförmigen Blechabschnitt gebildet ist. Dies bringt den Vorteil mit sich, dass durch diese Maßnahme ein Werkzeug zum Herstellen der Pressverbindung einfach an der Rohrpresskupplung zentriert werden kann bzw. sich selbst zentriert, wodurch die Qualität der Verpressung der Rohrpresskupplung weiter erhöht werden kann.

Gemäß einer Weiterbildung ist es möglich, dass anschließend an die Andrückschräge ein Axialanschlag ausgebildet ist, welcher gegenüber einem Hauptabschnitt der Gleithülse radial nach außen vorstehend ausgebildet ist. Dies bringt den Vorteil mit sich, dass die Rohrpresskupplung im vollständig verpressten Zustand eine definierte Position der einzelnen Bauteile zueinander einnehmen kann, wodurch die Wiederholbarkeit der Verpressung der Rohrpresskupplung verbessert werden kann.

Ferner kann es zweckmäßig sein, wenn die Erhebung an der Gleithülse in Form zumindest einer nach innen umgebogener Lasche ausgebildet ist. Besonders eine derart ausgebildete Rohrpresskupplung bringt die Vorteile einer einfachen Verpressbarkeit der Rohrpresskupplung mit sich.

Darüber hinaus kann vorgesehen sein, dass die Erhebung an der Gleithülse in Form von mehreren über den Umfang verteilt angeordneten Laschen ausgebildet ist, wobei die Laschen aus dem Hauptabschnitt der Gleithülse gestanzt sind, insbesondere dass jede der Laschen einem der Spannarme zugeordnet ist. Besonders eine derart ausgebildete Rohrpresskupplung bringt die Vorteile einer einfachen Verpressbarkeit der Rohrpresskupplung mit sich.

In einer alternativen Ausführungsvariante kann vorgesehen sein, dass die Erhebung an der Gleithülse in Form zumindest einer radial nach innen vorstehenden Sicke ausgebildet ist. Besonders eine derart ausgebildete Rohrpresskupplung bringt die Vorteile einer einfachen Verpressbarkeit der Rohrpresskupplung mit sich.

Gemäß einer besonderen Ausprägung ist es möglich, dass ein Anschlussteil ausgebildet ist, welches formschlüssig im Übergangsabschnitt aufgenommen ist. Dies bringt den Vorteil einer verbesserten Rohrpresskupplung mit sich. Insbesondere kann durch die formschlüssige Verbindung zwischen dem Anschlussteil und dem Übergangsabschnitt zwischen Außenhülse und Stützhülse, eine verbesserte Rohrpresskupplung erreicht werden.

Entsprechend einer vorteilhaften Weiterbildung kann vorgesehen sein, dass zwischen dem Anschlussteil und dem Übergangsabschnitt eine Anschlussteildichtung angeordnet ist. Dies bringt den Vorteil mit sich, dass die Rohrpresskupplung eine erhöhte Sicherheit bezüglich deren Funktionalität aufweisen kann.

Insbesondere kann es vorteilhaft sein, wenn zwischen der außenliegenden Aufnahmefläche der Stützhülse und dem Rohr eine Rohrdichtung angeordnet ist. Dies bringt den Vorteil mit sich, dass die Rohrpresskupplung eine erhöhte Sicherheit bezüglich deren Funktionalität aufweisen kann.

Ferner kann vorgesehen sein, dass an der außenliegenden Aufnahmefläche der Stützhülse eine Dichtungsaufnahme zur Aufnahme der Rohrdichtung in Form einer Vertiefung ausgebildet ist. Dies bringt den Vorteil mit sich, dass durch diese Maßnahme ein verbesserter Sitz der Rohrdichtung an der Stützhülse erreicht werden kann. Somit kann durch diese Maßnahme ein ungewolltes Verschieben der Rohrdichtung während dem Fügevorgang des zu verbindenden Rohres mit der Rohrpresskupplung unterbunden werden. Dadurch kann die Qualität der Verpressung mittels der Rohrpresskupplung verbessert werden.

Darüber hinaus kann vorgesehen sein, dass die Rohrdichtung in Form einer Flachdichtung ausgebildet ist, welche eine Axialerstreckung und eine Dichtungsdicke aufweist, wobei die Dichtungsdicke zwischen 1% und 60%, insbesondere zwischen 4% und 30%, bevorzugt zwischen 7% und 15% der Axialerstreckung beträgt. Dies bringt den Vorteil einer verbesserten Abdichtung einer verpressten Rohrpresskupplung mit sich.

Weiters kann vorgesehen sein, dass eine Tiefe der Dichtungsaufnahme zwischen 90% und 100%, insbesondere zwischen 95% und 105%, bevorzugt zwischen 98% und 102% der Dichtungsdicke beträgt. Dies bringt den Vorteil mit sich, dass das Rohr einfach in die Rohrpresskupplung eingeschoben werden kann, ohne dass dabei die Rohrdichtung verschoben wird. Insbesondere kann dadurch eine höhere Sicherheit der korrekten Verpressung erreicht werden.

Vorteilhaft ist auch eine Ausprägung, gemäß welcher vorgesehen sein kann, dass die Spannklammer an der Spannbereichinnenfläche eine Befestigungsnase aufweist, wobei die Befestigungsnase in Axialrichtung gesehen auf Höhe der Rohrdichtung angeordnet ist. Dies bringt den Vorteil mit sich, dass eine verbesserte Verbindung zwischen der Rohrpresskupplung und dem zu verpressenden Rohr erreicht werden kann.

Weiters kann vorgesehen sein, dass an der Spannklammer in Axialrichtung zur Befestigungsnase beabstandet eine weitere Befestigungsrippe ausgebildet ist. Darüber hinaus können zusätzliche Befestigungsrippen ausgebildet sein.

Die Rohrpresskupplung kann in einem unverpressten Zustand vorliegen, in welchem die Gleithülse axial in eine unverpresste Stellung verschoben ist. Diese unverpresste Stellung kann vor dem Herstellen einer Verbindung zwischen der Rohrpresskupplung und einem darin aufzunehmenden Rohr vorliegen.

Die Rohrpresskupplung kann in einem verpressten Zustand vorliegen, in welchem das Rohr zwischen der Stützhülse und der Spannklammer geklemmt ist. Hierbei ist die Gleithülse axial in eine verpresste Stellung verschoben. Sofern nicht explizit von einer unverpressten Stellung gesprochen wird, betreffen die in den Patentansprüchen beschriebenen Orts und Lageangaben von einzelnen Bauteilen zueinander, die verpresste Stellung, auch wenn das gepresste Rohr nicht teil der gegenständlichen Erfindung ist und somit nicht in der Rohrpresskupplung aufgenommen sein muss.

Zum Herstellen einer Pressverbindung zwischen der Rohrpresskupplung und dem damit zu verbindenden Rohr kann die Gleithülse in Axialrichtung in die Außenhülse hinein verschoben werden.

Die erfindungsgemäße Rohrpresskupplung kann zur Verbindung von zwei Rohren miteinander dienen.

In einer alternativen Ausführungsvariante kann die Rohrpresskupplung zur Verbindung eines Rohres mit einem Fitting dienen.

In einer weiteren alternativen Ausführungsvariante kann die Rohrpresskupplung direkt als Fitting ausgebildet sein und zur Verbindung mit einem Rohr dienen.

Zum besseren Verständnis der Erfindung wird diese anhand der nachfolgenden Figuren näher erläutert.

Es zeigen jeweils in stark vereinfachter, schematischer Darstellung:
- Fig. 1: eine Schnittdarstellung eines ersten Ausführungsbeispiels einer Rohrpresskupplung im unverpressten Zustand;
- Fig. 2: eine Schnittdarstellung des ersten Ausführungsbeispiels der Rohrpresskupplung im verpressten Zustand;
- Fig. 3: eine perspektivische Ansicht einer Spannklammer der Rohrpresskupplung;
- Fig. 4: eine perspektivische Ansicht einer Gleithülse der Rohrpresskupplung;
- Fig. 5: eine Schnittdarstellung eines weiteren Ausführungsbeispiels einer Rohrpresskupplung mit einer Sicke in der Gleithülse;
- Fig. 6: eine Schnittdarstellung eines weiteren Ausführungsbeispiels einer Rohrpresskupplung zur Verbindung von zwei Rohren;
- Fig. 7: eine Schnittdarstellung eines weiteren Ausführungsbeispiels einer Rohrpresskupplung zur 90°-Verbindung von zwei Rohren.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

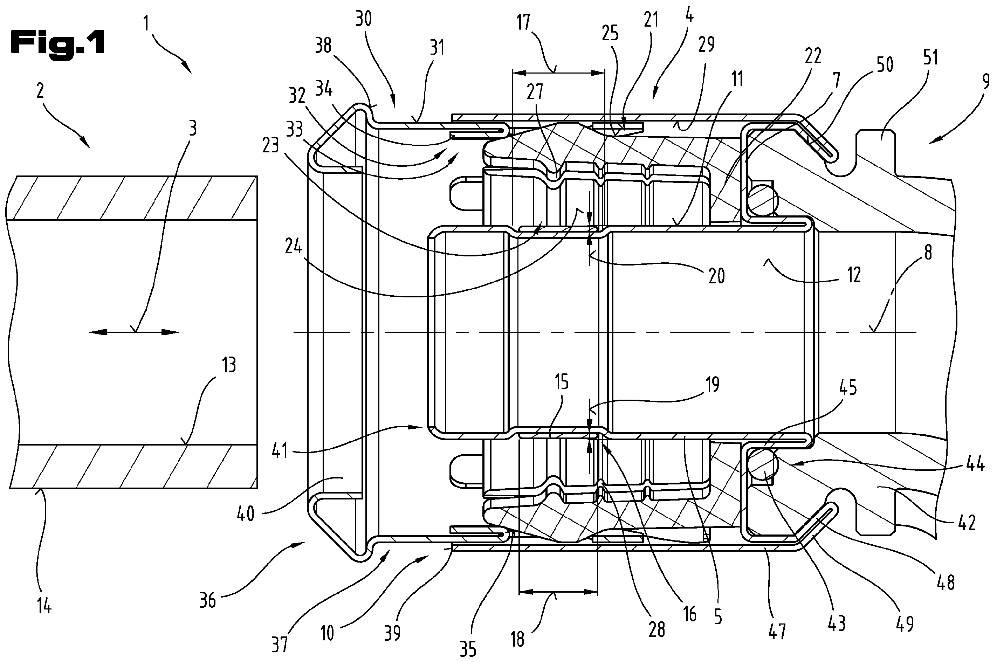

Fig. 1 zeigt eine Längsschnittdarstellung eines ersten Ausführungsbeispiels einer Rohrpresskupplung 1 zum Herstellen einer Pressverbindung mit einem Rohr 2.

In der Fig. 1 sind die Rohrpresskupplung 1 und das damit zu verbindende Rohr 2 im nicht gefügten Zustand dargestellt, wobei das Rohr 2 in einer Axialrichtung 3 von der Rohrpresskupplung 1 beabstandet dargestellt ist.

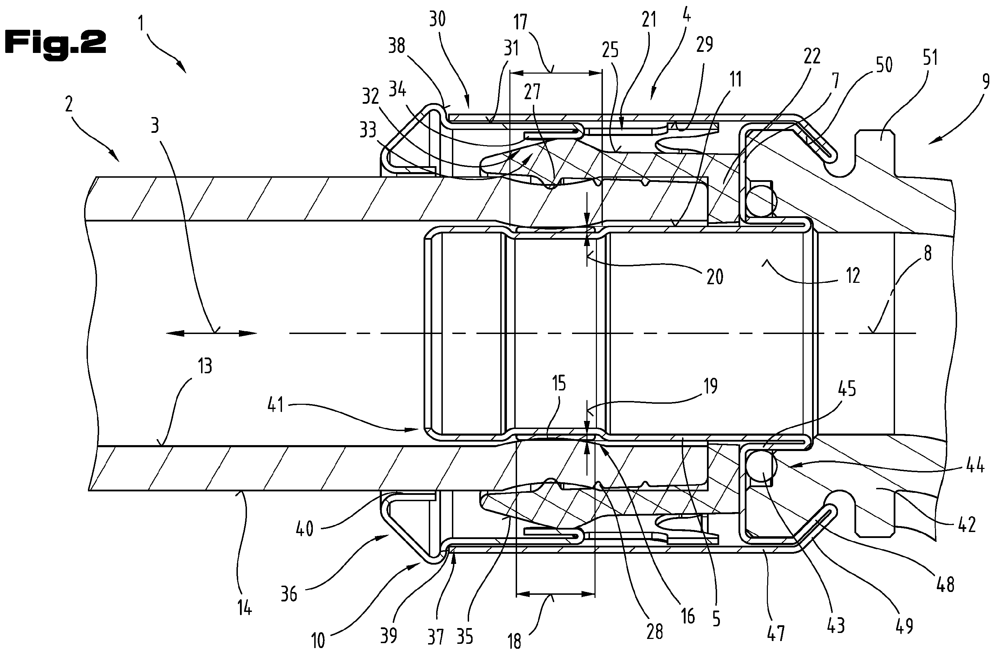

Fig. 2 zeigt das Ausführungsbeispiel der Rohrpresskupplung 1 nach Fig. 1 in einem mit dem Rohr 2 gefügten und gepressten Zustand.

Wie aus Fig. 2 ersichtlich, ist im verpressten Zustand das Rohr 2 in der Rohrpresskupplung 1 aufgenommen.

Die weiteren Bauteile bzw. Funktionen der Rohrpresskupplung 1 werden anhand einer Zusammenschau der Fig. 1 und 2 beschrieben.

Wie aus den Fig. 1 und 2 ersichtlich, ist vorgesehen, dass die Rohrpresskupplung 1 einen Hauptkörper 4 umfasst. Der Hauptkörper 4 ist als einteiliges Bauteil ausgebildet. Insbesondere ist vorgesehen, dass der Hauptkörper 4 als Blechumformteil ausgebildet ist. Vorzugsweise kann vorgesehen sein, dass der Hauptkörper 4 als Tiefziehteil ausgebildet ist.

Der Hauptkörper 4 umfasst eine Stützhülse 5 und eine Außenhülse 6. Die Stützhülse 5 und die Außenhülse 6 sind mittels eines Übergangsabschnittes 7 miteinander gekoppelt. Insbesondere kann vorgesehen sein, dass der Hauptkörper 4 bezüglich einer Rotationsachse 8 rotationssymmetrisch ausgebildet ist.

Wie aus den Fig. 1 und 2 weiters ersichtlich, ist vorgesehen, dass die Außenhülse 6 die Stützhülse 5 umgibt. Insbesondere kann vorgesehen sein, dass die Außenhülse 6 und die Stützhülse 5 konzentrisch zueinander angeordnet sind.

Weiters kann vorgesehen sein, dass der Übergangsabschnitt 7 an einem ersten Längsende 9 mit der Stützhülse 5 und der Außenhülse 6 gekoppelt ist. Weiters kann vorgesehen sein, dass die Stützhülse 5 und die Außenhülse 6 an einem zweiten Längsende 10 offen sind und somit einen Aufnahmebereich bzw. eine Einsteckseite bilden. Es ist vorgesehen, dass zwischen der Stützhülse 5 und der Außenhülse 6 ein Aufnahmeraum ausgebildet ist.

Wie aus Fig. 1 weiters ersichtlich, ist vorgesehen, dass die Stützhülse 5 eine Aufnahmefläche 11 aufweist, welche an einer Außenseite der Stützhülse 5 ausgebildet ist. Die Aufnahmefläche 11 der Stützhülse 5 kann somit von der Rotationsachse 8 abgewandt sein.

Weiters kann vorgesehen sein, dass die Stützhülse 5 eine Durchströmfläche 12 aufweist. Die Durchströmfläche 12 kann an der Stützhülse 5 innenliegend ausgebildet sein. Insbesondere kann die Durchströmfläche 12 der Rotationsachse 8 zugewandt sein.

Weiters kann vorgesehen sein, dass das Rohr 2 eine Rohrinnenmantelfläche 13 und eine Rohraußenmantelfläche 14 aufweist.

Im gefügten Zustand der Rohrpresskupplung 1 mit dem Rohr 2 kann, wie besonders gut aus Fig. 2 ersichtlich, die Rohrinnenmantelfläche 13 des Rohres 2 an der Aufnahmefläche 11 der Stützhülse 5 anliegen. Insbesondere kann vorgesehen sein, dass das Rohr 2 vom zweiten Längsende 10 her in den Aufnahmeraum zwischen der Stützhülse 5 und der Außenhülse 6 eingesteckt ist.

Weiters kann vorgesehen sein, dass eine Rohrdichtung 15 ausgebildet ist, welche im verpressten Zustand der Rohrpresskupplung 1 zwischen der Stützhülse 5 und dem Rohr 6 angeordnet ist. Insbesondere kann vorgesehen sein, dass an der Aufnahmefläche 11 der Stützhülse 5 eine Dichtungsaufnahme 16 angeordnet ist.

Die Dichtungsaufnahme 16 kann in Form einer Vertiefung ausgebildet sein, welche im Stützkörper 5 ausgebildet ist. Die Dichtungsaufnahme 16 kann eine Axialerstreckung 17 aufweisen. Weiters kann vorgesehen sein, dass die Rohrdichtung 15 eine Axialerstreckung 18 aufweist. Darüber hinaus kann die Rohrdichtung 15 eine Dichtungsdicke 19 aufweisen.

Die Axialerstreckung 17 der Dichtungsaufnahme 16 kann größer sein als die Axialerstreckung 18 der Rohrdichtung 15.

Weiters kann vorgesehen sein, dass die Dichtungsaufnahme 16 eine Tiefe 20 aufweist. Wenn die Dichtungsdicke 19 und die Tiefe 20 der Dichtungsaufnahme 16 annähernd gleich groß sind, kann erreicht werden, dass die Rohrdichtung 15 an der Stützhülse 5 aufgenommen ist und dabei nicht oder nur geringfügig über die Aufnahmefläche 11 der Stützhülse 5 vorsteht. Weiters ist vorgesehen, dass im Aufnahmeraum zwischen der Stützhülse 5 und der Außenhülse 6 eine Spannklammer 21 angeordnet ist. Die Spannklammer 21 dient zum Klemmen des Rohres 2 an der Stützhülse 5. Die Spannklammer 21 weist eine Basis 22 und einen Spannbereich 23 auf. Der Spannbereich 23 weist eine Spannbereichinnenfläche 24 und eine Spannbereichaußenfläche 25 auf. Die Spannbereichinnenfläche 24 dient zur Anlage an der Rohraußenmantelfläche 14 des Rohres 2. Weiters kann vorgesehen sein, dass im Spannbereich 23 der Spannklammer 21 mehrere Spannarme 26 ausgebildet sind. Die Spannarme 26 können in Radialrichtung elastisch biegbar mit der Basis 22 gekoppelt sein.

Weiters kann vorgesehen sein, dass an der Spannbereichinnenfläche 24 eine Befestigungsnase 27 ausgebildet ist. Die Befestigungsnase 27 kann als gegenüber der Spannbereichinnenfläche 24 vorstehende Erhebung ausgebildet sein. Insbesondere kann vorgesehen sein, dass beim Vorsehen von einzelnen Spannarmen 26 an zumindest einem der Spannarme 26 die Befestigungsnase 27 ausgebildet ist. Weiters kann vorgesehen sein, dass an jedem der Spannarme 26 eine der Befestigungsnasen 27 ausgebildet ist. Im zusammengebauten Zustand der Rohrpresskupplung 1 kann die Befestigungsnase 27 in Axialrichtung gesehen im Bereich der Rohrdichtung 15 angeordnet sein, sodass besonders im Bereich der Befestigungsnase 27 ein erhöhter Druck auf das zu verbindende Rohr 2 ausgeübt werden kann und somit eine erhöhte Pressung zwischen der Rohrinnenmantelfläche 13 des Rohres 2 und der Rohrdichtung 15 erreicht wird.

Wie aus den Fig. 1 und 2 weiters ersichtlich, kann vorgesehen sein, dass eine weitere Befestigungsnase 28 ausgebildet ist, welche ebenfalls an der Spannbereichinnenfläche 24 des Spannbereiches 23 angeordnet sein kann. Die weitere Befestigungsnase 28 kann in Axialrichtung zur Befestigungsnase 27 beabstandet angeordnet sein. Weiters kann vorgesehen sein, dass zusätzliche Befestigungsnasen in Axialrichtung zur Befestigungsnase 27 beabstandet ausgebildet sind. Die weitere Befestigungsnase 28 bzw. zusätzliche Befestigungsnasen können zur Axialsicherung, insbesondere zur Auszugssicherung des Rohres 2 in der Rohrpresskupplung 1 dienen.

Weiters ist vorgesehen, dass die Außenhülse 6 eine Außenhülseninnenmantelfläche 29 aufweist. Die Außenhülseninnenmantelfläche 29 dient zur Aufnahme einer Gleithülse 30. Es ist vorgesehen, dass die Gleithülse 30 eine Gleithülsenaußenseite 31 aufweist und eine Gleithülseninnenseite 32 aufweist. Die Gleithülsenaußenseite 31 kann an der Außenhülseninnenmantelfläche 29 anliegen. Es ist vorgesehen, dass die Gleithülse 30 axial verschiebbar im Aufnahmeraum zwischen der Stützhülse 5 und der Außenhülse 6 aufgenommen ist.

Weiters ist vorgesehen, dass an der Gleithülseninnenseite 32 eine Erhebung 33 ausgebildet ist. Die Erhebung 33 kann durch eine Lasche 34 gebildet sein, welche aus einem Hauptabschnitt 37 der Gleithülse 30 teilweise ausgestanzt bzw. eingestanzt und an die Gleithülseninnenseite 32 gebogen sein kann. Insbesondere kann vorgesehen sein, dass über den Umfang verteilt im Hauptabschnitt 37 der Gleithülse 30 mehrere Erhebungen 33, insbesondere mehrere Laschen 34 ausgebildet sind.

Weiters ist vorgesehen, dass an der Spannbereichaußenfläche 25 ein Presskeil 35 ausgebildet ist. Der Presskeil 35 erweitert sich zur Basis 22 der Spannklammer 21 hin.

In einem unverpressten Zustand der Rohrpresskupplung 1 kann die Erhebung 33 der Gleithülse 30 leicht am Presskeil 35 anliegen bzw. diesem zugewandt sein.

Zum Verpressen der Rohrpresskupplung 1 mit dem zu verpressenden Rohr 2 kann das Rohr 2 ausgehend von einer Situation, wie sie in Fig. 1 dargestellt ist, in Axialrichtung in den Aufnahmeraum zwischen der Aufnahmefläche 11 der Stützhülse 5 und der Spannbereichinnenfläche 24 der Spannklammer 21 eingeschoben werden. Dieses Einschieben kann durch manuelles Fügen erfolgen. Insbesondere kann vorgesehen sein, dass das Rohr 2 soweit in die Rohrpresskupplung 1 eingeschoben wird bis eine Stirnseite des Rohres 2 am Spannbereich 23 der Spannklammer 21 zur Anlage kommt. Insbesondere kann durch diese Maßnahme die Spannklammer 21 gegen den Übergangsabschnitt 7 des Hauptkörpers 4 gedrückt werden.

Wenn das Rohr 2 korrekt in die Rohrpresskupplung 1 eingesteckt ist, kann in einem anschließenden Verfahrensschritt die Gleithülse 30 in Axialrichtung zum ersten Längsende 9 des Hauptkörpers 4 hin verschoben werden, wodurch ein Verpressen der Spannklammer 21, insbesondere der Spannarme 26 mit dem Rohr 2 erreicht werden kann. Durch die Anlage bzw. das Abgleiten der Erhebung 33 an der Andrückschräge 36 kann die axiale Verschiebung der Gleithülse 30 bzw. die axiale Pressbewegung der Gleithülse 30 in ein radiales nach innen drücken des Spannbereiches 23, insbesondere der Spannbereichinnenfläche 24 der Spannklammer 21, umgewandelt werden. Die Erhebung 33 kann hierbei entlang des Presskeiles 35 gleiten.

Insbesondere kann vorgesehen sein, dass im Zuge der Verpressung der Rohrpresskupplung 1 mit dem Rohr 2, die Befestigungsnase 27 das Rohr 2 verformt, wodurch die Rohrinnenmantelfläche 13 des Rohres 2 an die Rohrdichtung 15 angepresst wird. Somit kann eine formschlüssige Verbindung zwischen der Rohrpresskupplung 1 und dem Rohr 2 erreicht werden.

Weiters kann vorgesehen sein, dass die weitere Befestigungsnase 28 bzw. zusätzliche Befestigungsnasen ebenfalls in die Rohraußenmantelfläche 14 des Rohres 2 eingedrückt werden. Dadurch kann eine Axialsicherung bzw. eine Auszugssicherung des Rohres 2 aus der Rohrpresskupplung 1 erreicht werden.

Insbesondere kann vorgesehen sein, dass das Verpressen bzw. das axiale Verschieben der Gleithülse 30 relativ zum Hauptkörper 4 mittels eines Presswerkzeuges erfolgt. Hierbei kann vorgesehen sein, dass an der Gleithülse 30 eine Andrückschräge 36 ausgebildet ist, welche zur Anlage bzw. zum Angriff des Presswerkzeuges dient. Insbesondere kann vorgesehen sein, dass die Andrückschräge 36 konisch verjüngend ausgebildet ist. Die Andrückschräge 36 kann an den Hauptabschnitt 37 anschließend ausgebildet sein.

Weiters kann vorgesehen sein, dass das Presswerkzeug eine mit der Andrückschräge 36 korrespondierende Andrückfläche aufweist, welche ebenfalls konisch ausgebildet ist. Durch die konische Formgebung der Andrückschräge 36 und des damit korrespondierenden Presswerkzeuges kann eine Selbstzentrierung des Presswerkzeuges beim Pressvorgang erreicht werden.

Weiters kann vorgesehen sein, dass zwischen der Andrückschräge 36 und dem Hauptabschnitt 37 ein Axialanschlag 38 ausgebildet ist, welcher in verpresstem Zustand der Rohrpresskupplung 1, wie dies in Fig. 2 ersichtlich ist, an einer Stirnseite 39 der Außenhülse 6 zur Anlage gebracht werden kann. Durch diese Maßnahme kann im verpressten Zustand der Rohrpresskupplung 1 eine exakte axiale Positionierung der Gleithülse 30 relativ zum Hauptkörper 4 erreicht werden, wodurch der Verpresszustand der Rohrpresskupplung 1 eindeutig definiert werden kann und somit Anwenderfehler möglichst unterbunden werden können.

Weiters kann vorgesehen sein, dass an der Gleithülsenaußenseite 31 eine Markierung, wie beispielsweise ein Farbindikator oder eine Markierung in sonstiger Form angeordnet ist, welche sichtbar ist, solange der Axialanschlag 38 die Stirnseite 39 der Außenhülse 6 nicht berührt. Dadurch kann ein noch nicht vollständiges Verpressen der Rohrpresskupplung 1 angezeigt werden. Insbesondere kann vorgesehen sein, dass die Gleithülsenaußenseite 31 im Hauptabschnitt 37 mit einer roten Farbe behaftet ist. Weiters kann vorgesehen sein, dass an die Andrückschräge 36 anschließend ein Verstärkungsabschnitt 40 ausgebildet ist. Der Verstärkungsabschnitt 40 kann in Form eines hohlzylindrischen Segmentes ausgebildet sein. Insbesondere kann vorgesehen sein, dass der Verstärkungsabschnitt 40 zur Stabilisierung der Andrückschräge 36 dient, wodurch hintangehalten werden kann, dass die Andrückschräge 36 bzw. die Gleithülse 30 durch das Presswerkzeug ungewollt verformt wird.

Weiters kann vorgesehen sein, dass am zweiten Längsende 10 der Stützhülse 5 eine Einführhilfe 41 ausgebildet ist. Die Einführhilfe 41 kann zum zweiten Längsende 10 hin verjüngend ausgebildet sein. Insbesondere kann vorgesehen sein, dass die Einführhilfe 41 dadurch gebildet ist, dass das hohlzylindrische Blech stirnseitig der Stützhülse 5 nach innen gezogen ist. Hierbei kann die Einführhilfe 41 einen Übergangsradius aufweisen.

Weiters kann vorgesehen sein, dass ein Anschlussteil 42 ausgebildet ist. Das Anschlussteil 42 kann mittels einer formschlüssigen Verbindung mit dem Hauptkörper 4 gekoppelt sein. Insbesondere kann vorgesehen sein, dass zwischen dem Anschlussteil 42 und dem Hauptkörper 4 eine Anschlussteildichtung 43 angeordnet ist. Insbesondere kann vorgesehen sein, dass im Anschlussteil 42 eine Dichtungsaufnahme 44 ausgebildet ist, in welcher die Anschlussteildichtung 43 aufgenommen ist. Die Dichtungsaufnahme 44 kann in Form eines Einstiches bzw. eines Absatzes an einer Stirnseite des Anschlussteiles 42 ausgebildet sein.

Weiters kann vorgesehen sein, dass im Bereich des Übergangsabschnittes 7 anschließend an die Stützhülse 5 ein erster Anschlussteilzylinderabschnitt 45 ausgebildet ist. Der erste Anschlussteilzylinderabschnitt 45 kann sich in Richtung zum zweiten Längsende 10 des Hauptkörpers 4 erstrecken. Insbesondere kann vorgesehen sein, dass am ersten Anschlussteilzylinderabschnitt 45 die Anschlussteildichtung 43 anliegt.

Weiters kann vorgesehen sein, dass anschließend an den Anschlussteilzylinderabschnitt 45 ein Anschlussteilstirnwandabschnitt 46 ausgebildet ist. Der Anschlussteilstirnwandabschnitt 46 kann sich in Radialrichtung erstrecken und zur axialen Anlage des Anschlussteils 42 dienen. Weiters kann vorgesehen sein, dass anschließend an den Anschlussteilstirnwandabschnitt 46 ein zweiter Anschlussteilzylinderabschnitt 47 ausgebildet ist, welcher den ersten Anschlussteilzylinderabschnitt 45 bzw. die Stützhülse 5 hülsenförmig umgeben kann.

Weiters kann vorgesehen sein, dass anschließend an den zweiten Anschlussteilzylinderabschnitt 47 ein erster Anschlussteilfixierabschnitt 48 ausgebildet ist. Der erste Anschlussteilfixierabschnitt 48 kann sich zum ersten Längsende 9 hin verjüngend ausgebildet sein. Weiters kann zum ersten Anschlussteilfixierabschnitt 48 parallel verlaufend ein zweiter Anschlussteilfixierabschnitt 49 ausgebildet sein, welcher den ersten Anschlussteilfixierabschnitt 48 mit der Außenhülse 6 verbinden kann. Insbesondere kann vorgesehen sein, dass am Anschlussteil 42 eine Anschlussteilfixierschräge 50 ausgebildet ist, welche zum Zusammenwirken mit dem ersten Anschlussteilfixierabschnitt 48 dient.

Insbesondere kann vorgesehen sein, dass beim Herstellen der Rohrpresskupplung 1 zum Fügen des Hauptkörpers 4 mit dem Anschlussteil 42 der erste Anschlussteilfixierabschnitt 48 und der zweite Anschlussteilfixierabschnitt 49 unverformt sind und zylindrisch ausgebildet sind. Somit kann das Anschlussteil 42 in Axialrichtung in den Hauptkörper 4 eingeschoben werden.

In einem anschließenden Fügeschritt können der erste Anschlussteilfixierabschnitt 48 und der zweite Anschlussteilfixierabschnitt 49 derart nach innen verpresst bzw. verformt werden, dass der erste Anschlussteilfixierabschnitt 48 an der Anschlussteilfixierschräge 50 zur Anlage kommt und somit das Anschlussteil 42 formschlüssig im Hauptkörper 4 aufgenommen ist. Dieser vorbereitende Schritt zum Fügen des Anschlussteils 42 mit dem Hauptkörper 4 kann vor dem Assemblieren der Rohrpresskupplung 1 erfolgen.

Weiters kann vorgesehen sein, dass am Anschlussteil 42 ein Gegenhalter 51 ausgebildet ist. Der Gegenhalter 51 kann beispielsweise in Form eines umlaufenden Wulstes ausgebildet sein. Insbesondere kann vorgesehen sein, dass der Gegenhalter 51 zum Abstützen des Verpresswerkzeuges dient. Das Verpresswerkzeug kann somit beim Verpressen an einer Seite am Gegenhalter 51 anliegen und an der zweiten Seite an der Andrückschräge 36 der Gleithülse 30 anliegen, um eine axiale Fügekraft auf die Gleithülse 30 aufbringen zu können.

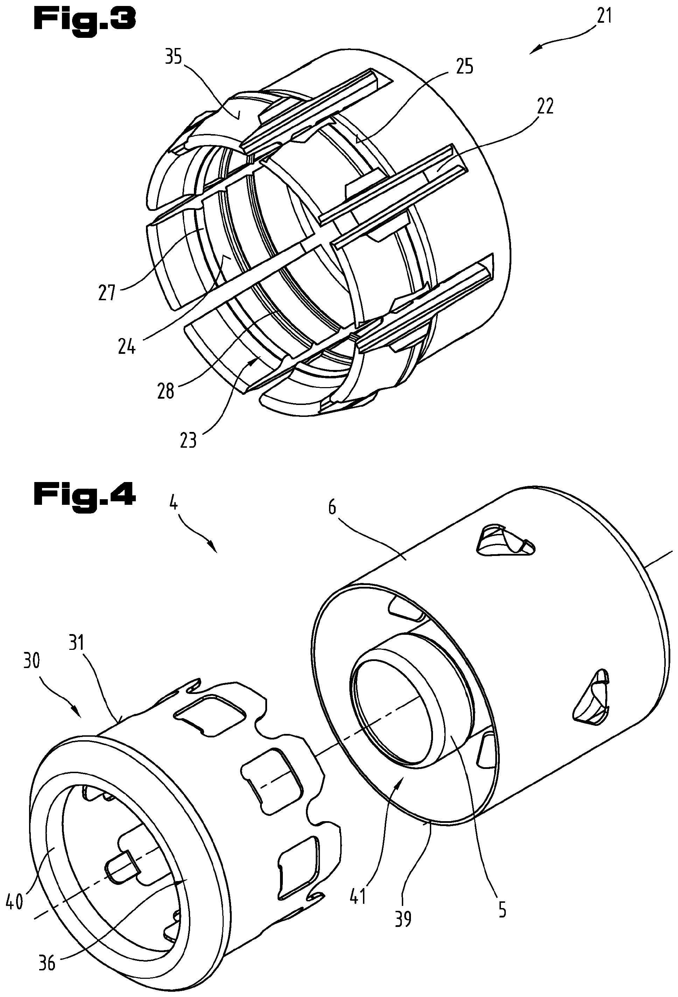

Fig. 3 zeigt die Spannklammer 21 in einer perspektivischen Ansicht, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Aus Fig. 3 sind die einzelnen Spannarme 26 der Spannklammer 21 besonders gut ersichtlich. Wie aus Fig. 3 ersichtlich, kann vorgesehen sein, dass zwischen den einzelnen Spannarmen 26 der Spannklammer 21 jeweils Schlitze bzw. ein geringfügiger Abstand ausgebildet ist, sodass die einzelnen Spannarme 26 in Radialrichtung veschiebbar sind. Wie aus Fig. 3 weiters ersichtlich, kann vorgesehen sein, dass die einzelnen Spannarme 26 der Spannklammer 21 im unbelasteten Zustand zur von der Basis 22 abgewandten Seite hin leicht nach außen gebogen bzw. nach außen vorgespannt sind.

Fig. 4 zeigt eine perspektivische Ansicht der Gleithülse 30, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen. In Fig. 4 sind die Laschen 34 besonders gut ersichtlich.

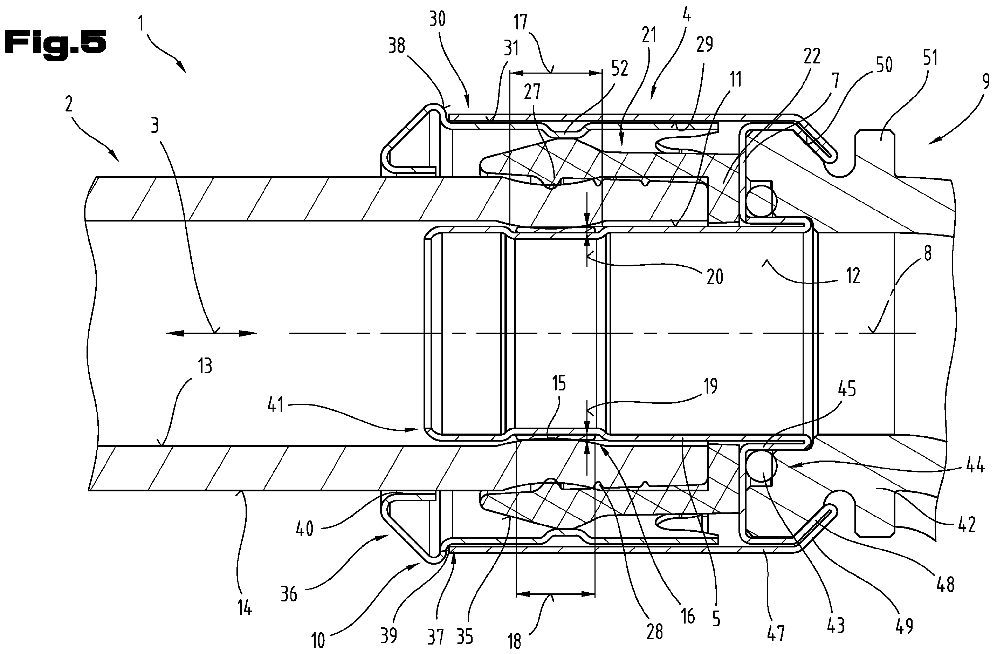

Fig. 5 zeigt ein weiteres Ausführungsbeispiel der Rohrpresskupplung 1, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen. Wie aus Fig. 5 ersichtlich, kann vorgesehen sein, dass die Erhebungen 33 in der Gleithülse 30 in Form von Sicken 52 ausgebildet sind, welche in den Hauptabschnitt 37 der Gleithülse 30 eingebracht sind.

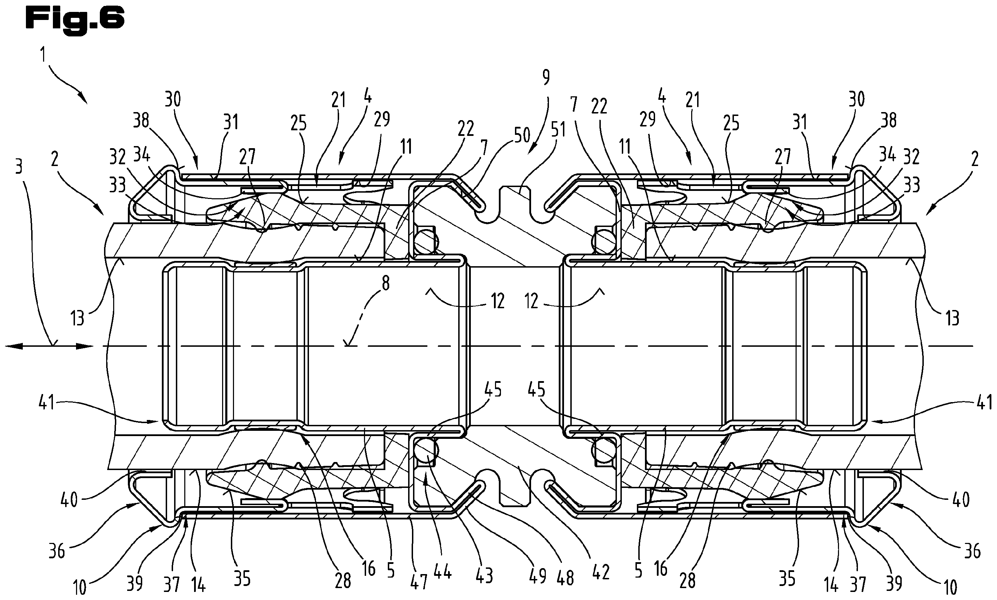

Fig. 6 zeigt ein weiteres Ausführungsbeispiel der Rohrpresskupplung 1, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen. Wie aus Fig. 6 ersichtlich, kann vorgesehen sein, dass die Rohrpresskupplung 1 zur Aufnahme von zwei Rohren 2 dient, wobei der Aufbau der Rohrpresskupplung 1 im Bereich des Anschlussteiles 42 gespiegelt ausgebildet sein kann.

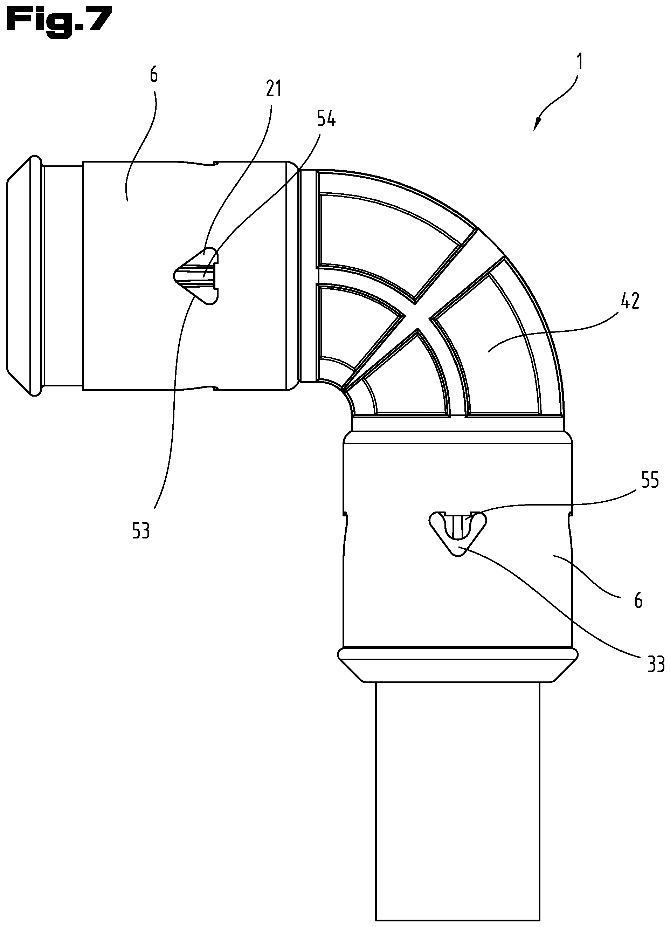

Fig. 7 zeigt ein weiteres Ausführungsbeispiel der Rohrpresskupplung 1, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen. Wie aus Fig. 7 ersichtlich, kann vorgesehen sein, dass das Anschlussteil 42 in Form eines 90° Bogens ausgebildet ist und die Rohrpresskupplung 1 somit als Winkelstück dienen kann. Natürlich sind alternativ zu einem 90° Winkel auch weitere Winkel möglich.

Wie aus Fig. 7 weiters ersichtlich, kann vorgesehen sein, dass in der Außenhülse 6 ein erstes Sichtfenster 53 ausgebildet ist. Weiters kann in der Spannklammer 21 ein zweites Sichtfenster 54 ausgebildet sein. Die Spannklammer 21 kann derart im Hauptkörper 4 positioniert sein, dass im unverpressten Zustand das erste Sichtfenster 53 der Außenhülse 6 und das zweite Sichtfenster 54 der Spannklammer 21 deckungsgleich sind, sodass von außen ersichtlich ist, ob das Rohr 2 korrekt in die Rohrpresskupplung 1 eingesteckt ist.

Wie aus dem unteren Bereich der Darstellung nach Fig. 7 ersichtlich, kann vorgesehen sein, dass zusätzlich in der Gleithülse 30 ein drittes Sichtfenster 55 angeordnet ist, durch welche auch im verpressten Zustand der Rohrpresskupplung 1 ersichtlich ist, ob das Rohr 2 nach wie vor korrekt in der Rohrpresskupplung 1 positioniert ist. Im verpressten Zustand der Rohrpresskupplung 1 können das erste Sichtfenster 53 der Außenhülse 6, das zweite Sichtfenster 54 der Spannklammer 21 und das dritte Sichtfenster 55 der Gleithülse 30 deckungsgleich angeordnet sein.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Rohrpresskupplung | 29 | Außenhülseninnenmantelfläche |
| 2 | Rohr | 30 | Gleithülse |
| 3 | Axialrichtung | 31 | Gleithülsenaußenseite |
| 4 | Hauptkörper | 32 | Gleithülseninnenseite |
| 5 | Stützhülse | 33 | Erhebung |
| 6 | Außenhülse | 34 | Lasche |
| 7 | Übergangsabschnitt | 35 | Presskeil |
| 8 | Rotationsachse | 36 | Andrückschräge |
| 9 | erstes Längsende | 37 | Hauptabschnitt |
| 10 | zweites Längsende | 38 | Axialanschlag |
| 11 | Aufnahmefläche der Stützhülse | 39 | Stirnseite |
| 12 | Durchströmfläche der Stützhülse | 40 | Verstärkungsabschnitt |
| 13 | Rohrinnenmantelfläche | 41 | Einführhilfe |
| 14 | Rohraußenmantelfläche | 42 | Anschlussteil |
| 15 | Rohrdichtung | 43 | Anschlussteildichtung |
| 16 | Dichtungsaufnahme | 44 | Dichtungsaufnahme |
| 17 | Axialerstreckung Dichtungsaufnahme | 45 | erster Anschlussteilzylinderabschnitt |
| 18 | Axialerstreckung | 46 | Anschlussteilstirnwandabschnitt |
| 19 | Dichtungsdicke | 47 | zweiter Anschlussteilzylinderabschnitt |
| 20 | Tiefe der Dichtungsaufnahme | | |
| 21 | Spannklammer | 48 | erster Anschlussteilfixierabschnitt |
| 22 | Basis | 49 | zweiter Anschlussteilfixierabschnitt |
| 23 | Spannbereich | | |
| 24 | Spannbereichinnenfläche | 50 | Anschlussteilfixierschräge |
| 25 | Spannbereichaußenfläche | 51 | Gegenhalter |
| 26 | Spannarm | 52 | Sicke |
| 27 | Befestigungsnase | 53 | erstes Sichtfenster Außenhülse |
| 28 | weitere Befestigungsnase | | |
| 54 | zweites Sichtfenster Spannklammer | | |
| 55 | drittes Sichtfenster Gleithülse | | |

## Patentansprüche

1. Rohrpresskupplung (1) umfassend:
- eine Stützhülse (5) mit einer außenliegenden Aufnahmefläche (11) zur Aufnahme einer Rohrinnenmantelfläche (13) eines Rohres (2);
- eine Spannklammer (21) zum Andrücken der Rohrinnenmantelfläche (13) des Rohres (2) an die Stützhülse (5), wobei die Spannklammer (21) eine Basis (22) und einen Spannbereich (23) aufweist, wobei der Spannbereich (23) eine Spannbereichinnenfläche (24) aufweist, welche zur Anlage an einer Rohraußenmantelfläche (14) des Rohres (2) ausgebildet ist, wobei die Spannklammer (21) im Spannbereich (23) eine Spannbereichaußenfläche (25) aufweist, welche zumindest abschnittsweise in Axialrichtung (3) weg von der Basis (22) verjüngend ausgebildet ist und somit einen Presskeil (35) bildet;
- eine Außenhülse (6), welche mit der Stützhülse (5) gekoppelt ist, wobei die Außenhülse (6) eine Außenhülseninnenmantelfläche (29) aufweist;
- eine Gleithülse (30), welche verschiebbar in der Außenhülse (6) aufgenommen ist, wobei die Gleithülse (30) eine Gleithülsenaußenseite (31) aufweist, welche im verpressten Zustand zumindest abschnittsweise an der Außenhülseninnenmantelfläche (29) anliegt und wobei die Gleithülse (30) eine Gleithülseninnenseite (32) aufweist, welche im verpressten Zustand an der Spannbereichaußenfläche (25) der Spannklammer (21) anliegt, wobei die Gleithülse (30) an der Gleithülseninnenseite (32) eine Erhebung (33) aufweist, wobei im verpressten Zustand die Erhebung (33) an der Außenfläche der Spannklammer (21) anliegt,
**dadurch gekennzeichnet, dass**
die Rohrpresskupplung (1) einen Hauptkörper (4) umfasst, wobei der Hauptkörper (4) einteilig aus einem Blechumformteil ausgebildet ist, wobei im Hauptkörper (4) die Außenhülse (6) und die Stützhülse (5) ausgebildet sind und mittels eines Übergangsabschnittes (7) miteinander gekoppelt sind.

2. Rohrpresskupplung (1) nach Anspruch 1, **dadurch gekennzeichnet, dass** im Spannbereich (23) der Spannklammer (21) mehrere über den Umfang verteilte Spannarme (26) ausgebildet sind, welche mit der Basis (22) gekoppelt sind.

3. Rohrpresskupplung (1) nach einem der vorhergehenden Ansprüche, **dadurch gekennzeichnet, dass** die Gleithülse (30) aus einem Blechumformteil ausgebildet ist.

4. Rohrpresskupplung (1) nach Anspruch 3, **dadurch gekennzeichnet, dass** die Gleithülse (30) eine Andrückschräge (36) aufweist, welche durch einen konusförmigen Blechabschnitt gebildet ist.

5. Rohrpresskupplung (1) nach Anspruch 3, **dadurch gekennzeichnet, dass** anschließend an die Andrückschräge (36) ein Axialanschlag (38) ausgebildet ist, welcher gegenüber einem Hauptabschnitt (37) der Gleithülse (30) radial nach außen vorstehend ausgebildet ist.

6. Rohrpresskupplung (1) nach Anspruch 3 oder 4, **dadurch gekennzeichnet, dass** die Erhebung (33) der Gleithülse (30) in Form zumindest einer nach innen umgebogener Lasche (34) ausgebildet ist.

7. Rohrpresskupplung (1) nach Anspruch 6, **dadurch gekennzeichnet, dass** die Erhebung (33) der Gleithülse (30) in Form von mehreren über den Umfang verteilt angeordneten Laschen (34) ausgebildet ist, wobei die Laschen (34) aus dem Hauptabschnitt (37) der Gleithülse (30) gestanzt sind, insbesondere dass jede der Laschen (34) einem der Spannarme (26) zugeordnet ist.

8. Rohrpresskupplung (1) nach einem der Ansprüche 1 bis 5, **dadurch gekennzeichnet, dass** die Erhebung (33) der Gleithülse (30) in Form zumindest einer radial nach innen vorstehender Sicke (52) ausgebildet ist

9. Rohrpresskupplung (1) nach Anspruch 1, **dadurch gekennzeichnet, dass** als Teil der Rohrpresskupplung (1) ein Anschlussteil (42) ausgebildet ist, welches formschlüssig im Übergangsabschnitt (7) aufgenommen ist.

10. Rohrpresskupplung (1) nach Anspruch 9, **dadurch gekennzeichnet, dass** zwischen dem Anschlussteil (42) und dem Übergangsabschnitt (7) eine Anschlussteildichtung (43) angeordnet ist.

11. Rohrpresskupplung (1) nach einem der vorhergehenden Ansprüche, **dadurch gekennzeichnet, dass** zwischen der außenliegenden Aufnahmefläche (11) der Stützhülse (5) und dem Rohr (2) eine Rohrdichtung (15) angeordnet ist.

12. Rohrpresskupplung (1) nach Anspruch 11, **dadurch gekennzeichnet, dass** an der außenliegenden Aufnahmefläche (11) der Stützhülse (5) eine Dichtungsaufnahme (16) zur Aufnahme der Rohrdichtung (15) in Form einer Vertiefung ausgebildet ist.

13. Rohrpresskupplung (1) nach Anspruch 11 oder 12, **dadurch gekennzeichnet, dass** die Rohrdichtung (15) in Form einer Flachdichtung ausgebildet ist, welche eine Axialerstreckung (18) und eine Dichtungsdicke (19) aufweist, wobei die Dichtungsdicke (19) zwischen 1% und 60%, insbesondere zwischen 4% und 30%, bevorzugt zwischen 7% und 15% der Axialerstreckung (18) beträgt.

14. Rohrpresskupplung (1) nach Anspruch 13, **dadurch gekennzeichnet, dass** die Spannklammer (21) an der Spannbereichinnenfläche (24) eine Befestigungsnase (27) aufweist, wobei die Befestigungsnase (27) in Axialrichtung (3) gesehen auf Höhe der Rohrdichtung (15) angeordnet ist.

## Claims

1. A pipe press coupling (1) comprising:
- a support sleeve (5) having an outer receiving surface (11) for receiving a pipe inner lateral surface (13) of a pipe (2);
- a clamping bracket (21) for pressing the pipe inner lateral surface (13) of the pipe (2) against the support sleeve (5), wherein the clamping bracket (21) comprises a base (22) and a clamping region (23), wherein the clamping region (23) comprises a clamping region inner surface (24), which is formed to be in contact with a pipe outer lateral surface (14) of the pipe (2), wherein the clamping bracket (21), in the clamping region (23), comprises a clamping region outer surface (25) which is tapered at least in sections in the axial direction (3) away from the base (22) and thus forms a pressing wedge (35);
- an outer sleeve (6) which is coupled to the support sleeve (5), wherein the outer sleeve (6) has an outer sleeve inner lateral surface (29);
- a sliding sleeve (30) that is slidably received within the outer sleeve (6), wherein the sliding sleeve (30) has a sliding sleeve outer side (31) that, in the pressed state, abuts at least in sections against the outer sleeve inner lateral surface (29) and wherein the sliding sleeve (30) has a sliding sleeve inner side (32) which, in the pressed state, abuts against the clamping region outer surface (25) of the clamping bracket (21), wherein the sliding sleeve (30) has an elevation (33) on the sliding sleeve inner side (32), wherein, in the pressed state, the elevation (33) abuts against the outer surface of the clamping bracket (21),
**characterized in that**
the pipe press coupling (1) comprises a main body (4), wherein the main body (4) is formed in one piece from a sheet metal forming part, wherein the outer sleeve (6) and the support sleeve (5) are formed in the main body (4) and are coupled to one another by means of a transition section (7).

2. The pipe press coupling (1) according to claim 1, **characterized in that** in the clamping region (23) of the clamping bracket (21), multiple clamping arms (26) are formed, which are coupled to the base (22) and distributed over the circumference.

3. The pipe press coupling (1) according to one of the preceding claims, **characterized in that** the sliding sleeve (30) is formed from a sheet metal forming part.

4. The pipe press coupling (1) according to claim 3, **characterized in that** the sliding sleeve (30) has a pressure bevel (36) formed by a conical sheet metal section.

5. The pipe press coupling (1) according to claim 3, **characterized in that** an axial stop (38), which is formed to project radially outward relative to a main section (37) of the sliding sleeve (30), is formed adjacent to the pressure bevel (36).

6. The pipe press coupling (1) according to claim 3 or 4, **characterized in that** the elevation (33) of the sliding sleeve (30) is formed in the form of at least one inwardly bent tab (34).

7. The pipe press coupling (1) according to claim 6, **characterized in that** the elevation (33) of the sliding sleeve (30) is formed in the form of multiple tabs (34) arranged distributed over the circumference, wherein the tabs (34) are punched out of the main section (37) of the sliding sleeve (30), in particular that each of the tabs (34) is associated with one of the clamping arms (26).

8. The pipe press coupling (1) according to one of claims 1 to 5, **characterized in that** the elevation (33) of the sliding sleeve (30) is formed in the form of at least one radially inwardly projecting beading (52).

9. The pipe press coupling (1) according to claim 1, **characterized in that** a connection part (42), which is received in a form-fitting manner in the transition section (7), is formed as part of the pipe press coupling (1).

10. The pipe press coupling (1) according to claim 9, **characterized in that** a connection part seal (43) is arranged between the connection part (42) and the transition section (7).

11. The pipe press coupling (1) according to one of the preceding claims, **characterized in that** a pipe seal (15) is arranged between the outer receiving surface (11) of the support sleeve (5) and the pipe (2).

12. The pipe press coupling (1) according to claim 11, **characterized in that** a seal receptacle (16) for receiving the pipe seal (15) is formed on the outer receiving surface (11) of the support sleeve (5) in the form of a recess.

13. The pipe press coupling (1) according to claim 11 or 12, **characterized in that** the pipe seal (15) is formed as a flat seal having an axial extent (18) and a seal thickness (19), wherein the seal thickness (19) is between 1% and 60%, in particular between 4% and 30%, preferably between 7% and 15%, of the axial extent (18).

14. The pipe press coupling (1) according to claim 13, **characterized in that** the clamping bracket (21) has a fastening lug (27) on the clamping region inner surface (24), wherein the fastening lug (27) is arranged at the level of the pipe seal (15) as viewed in the axial direction (3).

## Revendications

1. Raccord de tuyau à compression (1) comprenant :
- un manchon de maintien (5) pourvu d'une surface de réception externe (11) destinée à recevoir une surface périphérique interne de tuyau (13) d'un tuyau (2) ;
- un collier de serrage (21) destiné à presser la surface périphérique interne de tuyau (13) du tuyau (2) contre le manchon de maintien (5), dans lequel le collier de serrage (21) présente une base (22) et une région de serrage (23), dans lequel la région de serrage (23) présente une surface interne de région de serrage (24), qui est conçue pour venir en appui contre une surface périphérique externe de tuyau (14) du tuyau (2), dans lequel le collier de serrage (21) présente une surface externe de région de serrage (25) dans la région de serrage (23), qui est conçue de manière effilée au moins par sections dans la direction axiale (3) à l'écart de la base (22) et forme ainsi une cale de pression (35) ;
- un manchon externe (6) qui est couplé au manchon de maintien (5), dans lequel le manchon externe (6) présente une surface périphérique interne de manchon externe (29) ;
- un manchon coulissant (30), qui est logé de manière coulissante dans le manchon externe (6), dans lequel le manchon coulissant (30) présente un côté externe de manchon coulissant (31) qui, à l'état pressé, repose au moins par sections contre la surface interne de manchon externe (29) et dans lequel le manchon coulissant (30) présente un côté interne de manchon coulissant (32) qui, à l'état pressé, repose contre la surface externe de région de serrage (25) du collier de serrage (21), dans lequel le manchon coulissant (30) présente une saillie (33) sur le côté interne de manchon coulissant (32), dans lequel, à l'état pressé, la saillie (33) s'applique contre la surface externe du collier de serrage (21), **caractérisé en ce que**
le raccord de tuyau à compression (1) comprend un corps principal (4), dans lequel le corps principal (4) est formé d'un seul tenant à partir d'une pièce de formage en tôle, dans lequel le manchon externe (6) et le manchon de maintien (5) sont formés dans le corps principal (4) et sont couplés l'un à l'autre au moyen d'une section de transition (7).

2. Raccord de tuyau à compression (1) selon la revendication 1, **caractérisé en ce que** plusieurs bras de serrage (26) répartis sur la périphérie sont formés dans la région de serrage (23) du collier de serrage (21), qui sont couplés à la base (22).

3. Raccord de tuyau à compression (1) selon l'une quelconque des revendications précédentes, **caractérisé en ce que** le manchon coulissant (30) est formé à partir d'une pièce de formage en tôle.

4. Raccord de tuyau à compression (1) selon la revendication 3, **caractérisé en ce que** le manchon coulissant (30) présente une pente de pression (36) qui est formée par une section de tôle en forme de cône.

5. Raccord de tuyau à compression (1) selon la revendication 3, **caractérisé en ce qu'**une butée axiale (38) est réalisée à la suite de la pente de pression (36), laquelle est réalisée en saillie radialement vers l'extérieur par rapport à une section principale (37) du manchon coulissant (30).

6. Raccord de tuyau à compression (1) selon la revendication 3 ou 4, **caractérisé en ce que** la saillie (33) du manchon coulissant (30) est réalisée sous la forme d'au moins une patte (34) repliée vers l'intérieur.

7. Raccord de tuyau à compression (1) selon la revendication 6, **caractérisé en ce que** la saillie (33) du manchon coulissant (30) est réalisée sous la forme de plusieurs pattes (34) réparties sur la périphérie, dans lequel les pattes (34) sont estampées à partir de la section principale (37) du manchon coulissant (30), en particulier **en ce que** chacune des pattes (34) est associée à l'un des bras de serrage (26).

8. Raccord de tuyau à compression (1) selon l'une quelconque des revendications 1 à 5, **caractérisé en ce que** la saillie (33) du manchon coulissant (30) est réalisée sous la forme d'au moins une moulure (52) faisant saillie radialement vers l'intérieur.

9. Raccord de tuyau à compression (1) selon la revendication 1, **caractérisé en ce qu'**une partie de connexion (42) est formée comme une partie du raccord de tuyau à compression (1), qui est reçue par complémentarité de forme dans la section de transition (7).

10. Raccord de tuyau à compression (1) selon la revendication 9, **caractérisé en ce qu'**un joint de partie de connexion (43) est agencé entre la partie de connexion (42) et la section de transition (7).

11. Raccord de tuyau à compression (1) selon l'une quelconque des revendications précédentes, **caractérisé en ce qu'**un joint d'étanchéité de tuyau (15) est agencé entre la surface de réception externe (11) du manchon de maintien (5) et le tuyau (2).

12. Raccord de tuyau à compression (1) selon la revendication 11, **caractérisé en ce qu'**un logement d'étanchéité (16) est réalisé sur la surface de réception externe (11) du manchon de maintien (5) pour loger le joint d'étanchéité de tuyau (15) sous la forme d'un renfoncement.

13. Raccord de tuyau à compression (1) selon la revendication 11 ou 12, **caractérisé en ce que** le joint d'étanchéité de tuyau (15) est réalisé sous la forme d'un joint d'étanchéité plat qui présente une extension axiale (18) et une épaisseur de joint d'étanchéité (19), dans lequel l'épaisseur de joint d'étanchéité (19) est comprise entre 1 % et 60 %, en particulier entre 4 % et 30 %, de préférence entre 7 % et 15 % de l'extension axiale (18).

14. Raccord de tuyau à compression (1) selon la revendication 13, **caractérisé en ce que** le collier de serrage (21) présente un bec de fixation (27) sur la surface interne de région de serrage (24), dans lequel le bec de fixation (27) est agencé au niveau du joint d'étanchéité de tuyau (15) dans la direction axiale (3).
